Europäisches Patentamt

European Patent Office

Office européen des brevets

(19)

(11) Veröffentlichungsnummer : **0 403 505 B1**

## (12) EUROPÄISCHE PATENTSCHRIFT

(45) Veröffentlichungstag der Patentschrift :
**10.06.92 Patentblatt 92/24**

(51) Int. Cl.$^5$ : **B60B 39/00**

(21) Anmeldenummer : **89902648.8**

(22) Anmeldetag : **27.02.89**

(86) Internationale Anmeldenummer :
**PCT/EP89/00185**

(87) Internationale Veröffentlichungsnummer :
**WO 89/08030 08.09.89 Gazette 89/21**

(54) **VORRICHTUNG ZUM SCHUTZ EINES FAHRZEUGRADS VOR AQUAPLANING.**

(30) Priorität : **03.03.88 DE 3806920**

(43) Veröffentlichungstag der Anmeldung :
**27.12.90 Patentblatt 90/52**

(45) Bekanntmachung des Hinweises auf die
Patenterteilung :
**10.06.92 Patentblatt 92/24**

(84) Benannte Vertragsstaaten :
**DE GB**

(56) Entgegenhaltungen :
**BE-A- 397 983**
**DE-A- 2 333 853**

(56) Entgegenhaltungen :
**DE-A- 2 611 447**
**FR-A- 1 468 222**
**US-A- 2 631 692**
**US-A- 3 680 885**

(73) Patentinhaber : **DEBUS, Klaus**
**Am Schwarzen Moor 13**
**W-2070 Ahrensburg (DE)**

(72) Erfinder : **DEBUS, Klaus**
**Am Schwarzen Moor 13**
**W-2070 Ahrensburg (DE)**

(74) Vertreter : **Glawe, Delfs, Moll & Partner**
**Patentanwälte**
**Liebherrstrasse 20**
**W-8000 München 26 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 403 505 B1

## Beschreibung

Die Erfindung betrifft eine Vorrichtung zum Schutz eines Fahrzeugrads vor dem Aufschwimmen (Aquaplaning) auf einer Wasserschicht mittels einer in die Wasserschicht eindringenden Verdrängungseinrichtung, die von einer Mehrzahl von Abstand voneinander aufweisenden Verdrängungselementen gebildet ist.

Es ist bekannt, dem vor Aquaplaning zu schützenden Fahrzeugrad eine Leitschaufel vorzusetzen, die die Wasserschicht anhebt und zur Seite ablenkt. Die praktische Verwirklichung scheitert bislang an zwei Problemen. Zum einen ist eine solche Einrichtung nur dann erfolgversprechend, wenn sie mit wenigen Millimetern bodenfreiheit über die Fahrbahn geführt wird, was zum Schutz vor Fahrbahnunregelmäßigkeiten hochsensible Höhensteuer voraussetzt. Zum anderen wirkt auf die Einrichtung bei hohen Geschwindigkeiten ein hoher Staudruck, der beträchtliche mechanische Probleme mit sich bringt. Zumindest das letztere gilt auch für eine bekannte Vorrichtung (US-A 3 680 885), bei welcher statt einer geschlossenen Leitschaufel eine Bürste verwendet wird, deren Borsten je einzeln einen Abstand von den benachbarten Borsten aufweisen können, die aber in ihrer Gesamtheit wie eine geschlossene Schaufel wirken. Der Vorschlag, die geringe Bodenfreiheit durch Verwendung einer Luftschlitzdüse zu ersetzen (DE-A 25 52 075) ist unrealistisch.

Der Erfindung liegt die Aufgabe zugrunde, eine Vorrichtung der eingangs genannten Art zu schaffen, die den Anforderungen der Praxis gerecht zu werden vermag.

Die erfindungsgemäße Lösung besteht darin, daß der auf die Richtung der Relativbewegung der Verdrängungselemente zu der Wasserschicht bezogene Verdrängungsquerschnitt der Gesamtheit der mit der Wasserschicht in Kontakt befindlichen Verdrängungselemente wesentlich geringer ist als ihr Einwirkungsquerschnitt.

Unter dem Einwirkungsquerschnitt ist diejenige Fläche in ihrer Gesamtheit zu verstehen, in welcher die Verdrängungseinrichtung auf die Flüssigkeitsschicht in solcher Weise einwirkt, daß deren für das Aquaplaning verantwortliche Eigenschaften maßgebend verändert werden. Unter dem Verdrängungsquerschnitt ist derjenige Flächenanteil des Einwirkungsquerschnitts zu verstehen, der von wasserverdrängenden Querschnittsteilen der Verdrängungseinrichtung beaufschlagt wird. Beide Flächen sind quer zu Richtung der Relativbewegung der Verdrängungselemente zu der Wasserschicht zu bestimmen, d.h. quer zu der Richtung, in welcher die Verdrängungselemente in die Wasserschicht eindringen.

Bei bisher bekannten Einrichtungen stimmen Verdrängungsquerschnitt und Einwirkungsquerschnitt überein. Beispielsweise sind der Verdrängungs- und der Einwirkungsquerschnitt einer bekannten Ablenkschaufel gleich dem Produkt aus Breite mal Höhe des in die Wasserschicht eintauchenden Teils der Schaufel, gesehen in Fahrtrichtung. Demgegenüber liegt der Erfindung der Gedanke zugrunde, daß es nicht erforderlich ist, dem gesamten Einwirkungsquerschnitt der Wasserschicht feste, ablenkende Teile der Verdrängungseinrichtung gegenüberzustellen, sondern daß es ausreicht, wenn die Verdrängungseinrichtung aus einer Mehrzahl von über den Einwirkungsquerschnitt verteilten Verdrängungselementen gebildet wird. Die Begründung dafür liegt darin, daß die kinetische Energie, die die Verdrängungselemente am Ort ihres Eintauchens auf das dort befindliche Wasser übertragen, sich auch als Sekundärwirkung den nicht unmittelbar beaufschlagten Querschnittsbereichen mitteilt, wodurch die Wasserschicht in ihrer Gesamtheit in lebhafte Bewegung versetzt, aufgeworfen, aufgelockert, mit Luft durchsetzt und/oder versprüht wird. Dabei beruht die Verhinderung des Aquaplanings nicht nur darauf, daß ein Teil der Flüssigkeit seitlich aus dem vom Fahrzeugrad zu durchfahrenden Bereich entfernt wird; vielmehr kann auch die in diesem Bereich verbleibende, aufgelockerte Flüssigkeit aus den folgenden Gründen keinen wesentlichen Auftriebseffekt mehr auf das Fahrzeugrad ausüben. Zum einen trifft ein großer Teil der versprühten Partikeln in beträchtlicher Höhe auf das Rad, wo sie keinen wesentlichen hebenden Impuls mehr darauf ausüben können und zur Seite abgedrängt werden. Zum anderen sind die Dichte und die Viskosität des in dem hydrodnamisch wirksamen Keilspalt vor der Reifenaufstandsfläche verbleibenden Flüssigkeitsanteils durch Vermischung mit Luft derart vermindert, daß er vom Reifen ohne gefährlichen Auftrieb bewältigt werden kann. Dies bedeutet, daß im Sinne der Erfindung schon eine solche Verdrängungseinrichtung erfolgreich sein kann, die beispielsweise aus einigen kammartig in die Flüssigkeitsschicht eintauchenden Elementen besteht, die von elastischen Stahldrähten, Drahtseilen, Kunststofffingern oder dergleichen gebildet sind und die leicht so gestaltet sein können, daß sie unempfindlich gegenüber gelegentlichem Aufschlag oder dauerndem Schleifen auf der Fahrbahn sind. Letzteres hängt auch damit zusammen, daß sie von der Funktion befreit sind, das Wasser in bestimmter Richtung aus dem Bereich des Fahrzeugrads ablenken zu müssen, und daher keine vorbestimmte Form oder Stellung haben müssen. Ihre primäre Funktion besteht lediglich in der Verdrängung des Wassers an derjenigen Stelle, an der sie zufällig in die Wasserschicht eintauchen, wobei sie sekundär aber auch den übrigen Teil der Wasserschicht beeinflussen, weil er durch das primär verdrängte Wasser in so heftige Bewegung versetzt wird, daß er ebenfalls weggeschleudert oder wenigstens aufgelockert und größtenteils angehoben wird.

Eine besonders vorteilhafte Ausführungsform der Verdrängungseinrichtung wird von einem Rotor mit etwa parallel zur Fahrzeugquerrichtung verlaufender Drehachse und etwa radial verlaufenden Verdrängungselementen gebildet. Deren Eigenart besteht darin, daß die Relativbewegung der Verdrängungselemente zur Wasserschicht nicht mit der Fahrtrichtung übereinstimmt, sondern daß sich die Verdrängungselemente schräg von oben mit einer Relativgeschwindigkeit in die Wasserschicht einsenken, die geringer als die Fahrgeschwindigkeit ist. Dadurch sind auch die Geräusche und die Kräfte entsprechend geringer. Die eingangs erläuterten Begriffe des Einwirkungequerschnitts und des Verdrängungsquerschnitts sind auf die von der Pahrtrichtung abweichende Richtung der Relativbewegung zu beziehen und erstrecken sich lotrecht dazu etwa in Umfangsrichtung des Rotors.

Dabei nimmt der Querschnitt der Verdrängungselemente in der Außenumfangsfläche des Rotors zweckmäßigerweise nicht mehr als etwa 30 % des Gesamtquerschnitts ein; weiter vorzugsweise nimmt er nicht mehr als etwa 15 % ein. Die Verdrängungselemente können nach der Erfindung stabförmig sein, was auch Rohrform einschließen soll. Sie können auch blattförmig sein, was auch die Kombination von radialen Blattelementen mit unterschiedlicher Richtung ihrer Ebenen zur Rotorachse umfassen soll, beispielsweise in Form von zur Umfangsfläche des Rotors offenen Kammern mit Waben- oder Rechteck-Querschnitt oder dergleichen.

Es können auch ausschließlich parallele, in quer zur Rotorachse verlaufenden Ebenen liegende Rötorblätter verwendet werden. Im allgemeinen bevorzugt die Erfindung jedoch solche Rotorblätter, die eine überwiegend parallel zur Rotorachse verlaufende Richtungskomponente haben und die also (mit anderen Worten ausgedrückt) mit der Fahrzeugquerrichtung einen Winkel von weniger als 45° einschließen.

Ein wesentlicher Vorteil eines Rotors gegenüber einer feststehenden Verdrängungseinrichtung besteht darin, daß der Rotor auf der Fahrbahn abrollen kann und daher weder auf Bodenfreiheit angewiesen ist noch zu einer wesentlichen Schleifbewegung führt. Auch ist die Geräuschbelastung geringer.

Die erfindungsgemäße Einwirkung des Rotors auf die Wasserschicht kommt folgendermaßen zustande. Die in die Schicht von schräg oben eindringenden Verdrängungselemente des Rotors lassen das Wasser in den zwischen den Verdrängungselementen befindlichen, freien Querschnittsräumen, die vorzugsweise als Zellen ausgebitdet sind, entsprechend ihrem Verdrängungsvolumen ansteigen. Diese (statisch gedachte) Wirkung steht jedoch im Hintergrund gegenüber der dynamischen Schlagwirkung der Verdrängungselemente. Bei hoher Fahrtgeschwindigkeit dringen sie mit so großer Relativgeschwindigkeit in die Wasserschicht ein, daß die von ihnen beaufschtagten Wasserteilchen derart beschteunigt werden, daß sie mit großer Wucht davon geschleudert werden und ihren Impuls auch auf benachbarte, nicht unmittelbar beaufschlagte Wasserteilchen übertragen. Dadurch wird das gesamte Wasser größtenteils in den freien Querschnittsbereichen des Rotors hochgespritzt und mit Luft durchmengt. Sobald die Verdrängungselemente den unteren Totpunkt überschritten haben, führen sie eine Hubbewegung durch, die auch das in den freien Querschnittsbereichen des Rotors befindliche Wasser mitnimmt. Es wird teils durch Adhäsion, teils durch Schaufelwirkung der Verdrängungselemente angehoben.

Wenn oben davon gesprochen wurde, daß die Verdrängungselemente radial angeordnet sind, so soll dies nur die ungefähre Richtung bezeichnen. Sehr häufig ist es vorteilhaft, sie gegenüber der Radialrichtung vorwärts gekrümmt auszuführen, weil dadurch einerseits der Eintauchwiderstand verringert und andererseits ihr Hubeinfluß auf das Wasser vergrößert wird.

Gute Ergebnisse werden mit Rotoren erzielt, die mit einer mit der Fahrgeschwindigkeit übereinstimmenden Umfangsgeschwindigkeit angetrieben werden und die somit schlupflos auf der Fahrbahn abrollen. Jedoch kann auch eine von der Fahrgeschwindigkeit abweichende Umfangsgeschwindigkeit Vorteile besitzen. Insbesondere kann ein betrieb mit einer die Fahrgeschwindigkeit übersteigenden Umfangsgeschwindigkeit zweckmäßig sein, wenn die Rotorblätter vorwärts gekrümmt sind, während bei geringerer Umfangsgeschwindigkeit des Rotors eine Rückwärtskrümmung Vorteile haben kann.

Wenn die Rotorumfangsgeschwindigkeit von der Fahrgeschwindigkeit abweicht, kann man den Rotorblättern auch eine das Wasser seitlich ablenkende Wirkung verleihen, indem man sie gegenüber der Fahrzeugquerrichtung schräg stellt. Wenn der Rotor eine geringere Umfangsgeschwindigkeit als die Fahrgeschwindigkeit aufweist, wird beispielsweise das Wasser von einer schrägstehenden Lamelle zu derjenigen Seite hin abgelenkt, auf welcher die Seitenkante der Lamelle weiter hinten liegt; umgekehrt bei einer die Fahrgeschwindigkeit übersteigenden Umfangsgeschwindigkeit. Unter der Schrägung der Rotorblätter gegenüber der Fahrzeugquerrichtung ist auch eine gepfeilte Form zu verstehen.

Ein Seitenfördereffekt des Rotors kann auch dadurch erzielt werden, daß die Rotorachse schräg zur Fahrzeugquerrichtung angeordnet wird. Die Verdrängungselemente des Rotors haben dann im Eintauchbereich eine Bewegungskomponente in Fahrzeugquerrichtung, die dazu beiträgt, die Flüssigkeit aus dem vom Fahrzeugrad zu durchfahrenden Bereich zu entfernen. Es kommt in diesem Zusammenhang nicht entscheidend auf die Form der Verdrängungselemente an. Jedoch wird der genannte Effekt durch eine in Fahrtrichtung gestreckte Querschnittsform gefördert, d.h. durch eine Form, die quer zur Seitenförderrichtung ausgedehnte Förderflächen bildet.

Der Rotor kann mit einem Zwangsantrieb versehen sein, der ihm die gewünschte Umfangsgeschwindigkeit verleiht, wobei dieser Zwangsantrieb über eine gesonderte Bewegungstransmission vom Fahrzeugmotor abgeleitet sein kann. Es kann für den Rotor auch ein gesonderter Elektro- oder Hydraulikmotor vorgesehen sein. Es ist auch möglich, die Bewegung des Rotors von einem Reibrad abzuleiten, das gegen die Fahrbahn oder gegen die Lauffläche eines Reifens gedrückt wird. Schließlich ist es auch möglich, auf einen gesonderten betrieb des Rotors zu verzichten und ihn entweder dadurch anzutreiben, daß er auf der Fahrbahn abrollt, oder ihn ohne Antrieb und Bodenberührung zu lassen, so daß er lediglich dann passiv mitläuft, wenn er in eine Wasserschicht eintaucht. Letzteres ist in der Regel unbedenklich, weil etwaige Wasserschichten im allgemeinen mit geringer Eintauchhöhe beginnen und daher eine relativ sanfte Betchleunigung des Rotort möglich ist, sofern er mit geringem Trägheitsmoment ausgestattet ist. Es kann eine Bremse vorgesehen sein, die dafür sorgt, daß die Umfangsgeschwindigkeit des Rotors geringer als die Fahrgeschwindigkeit bleibt, wenn dies aus den weiter oben erörterten Gründen gewünscht wird.

Der Rotor kann so angeordnet sein, daß er im wesentlichen Fahrbahnberührung besitzt. Dies ist insbesondere dann möglich, wenn seine Umfangsgeschwindigkeit mit der Fahrgeschwindigkeit übereinstimmt und seine Achse in Fahrzeugquerrichtung verläuft. Stattdessen kann er auch mit geringer Bodenfreiheit angeordnet sein. Zu diesem Zweck kann eine geeignete Steuerungseinrichtung vorgesehen sein. Nach einem weiteren Merkmal der Erfindung kann dem Rotor ein Stützrad zugeordnet sein, das in unmittelbarer Nähe des Rotors auf dem Boden abrollt und mechanisch mit dessen Achslager verbunden ist. Im einfachsten Falle sitzt das Stützrad mit etwas größerem Durchmesser als der Rotor auf einer gemeinsamen Achse mit diesem, wobei es als einzelnes Stützrad auf einer Seite oder als doppeltes auf beiden Seiten angeordnet sein kann. Es kann auch in Gestalt von Seitenflanschen einstückig mit dem Rotor verbunden sein.

Nach einem wichtigen Merkmal der Erfindung ist die Verdrängungseinrichtung mit einer ihr nachgeschalteten Ablenkeinrichtung kombiniert, die das von der Verdrängungseinrichtung hochgespritzte Wasser aus dem Bereich heraus ablenkt, der von dem Fahrzeugrad durchfahren werden soll. Sie kann in der Art bekannter Ablenkschaufeln ausgebildet sein, wobei sie aber nicht so geringer Bodenfreiheit bedarf wie diese, weil das von ihr abzulenkende Wasser durch die Verdrängungseinrichtung angehoben wurde. Beispielsweise ist es möglich, die untere Kante der Alenkeinrichtung einen oder mehrere Zentimeter oberhalb der fahrbahn anzuordnen. Das Problem der Kollision mit fahrbahnunregelmäßigkeiten wird dadurch ausgeschaltet.

Erfindungsgemäß kann die Verdrängungseinrichtung eine geringere Breite haben als das zu schützende Fahrzeugrad, wenn die ihr nachgeschaltete Ablenkeinrichtung den Wasserstrom derart gegen die von der Verdrängungseinrichtung stehengelassenen Ränder der Wasserschicht lenkt, daß diese dadurch gleichfalls seitlich beschleunigt und mindestens zu einem wesentlichen Teil aus dem vom Fahrzeugrad zu durchfahrenden Bereich entfernt werden. Dadurch wird der Querschnittsbereich, auf den die Verdrängungs- und Ablenkeinrichtungen einwirken müssen, weiter verringert, und die in dem Einwirkungsquerschnitt auf das Wasser übertragene Energie wird sekundär genutzt.

Die dem Rotor gegebenenfalls nachgeschaltete Ablenkeinrichtung kann, wie gesagt, eine verhältnismäßig große Bodenfreiheit aufweisen. Dennoch kann es zweckmäßig sein, ihre Höhenlage über der Fahrbahn zu steuern. Nach einem weiteren Merkmal der Erfindung ist dies dadurch möglich, daß der Rotor höhenbestimmend mit der Ablenkeinrichtung verbunden ist, beispielsweise durch mechanische Verbindung mit der Rotorachse oder mit dem den Rotor haltenden Gestell oder durch Unterbringung in einem gemeinsamen Gehäuse. Die Höhe des Rotors in Bezug auf die Fahrbahnoberfläche wird primär bestimmt, nämlich insbesondere durch Abrollen des Rotors oder eines mit ihm verbundenen Stützrades auf der Fahrbahnoberfläche; die Höhe der Ablenkeinrichtung ergibt sich dann sekundär aus der Höhe des Rotors.

Wenn die erfindungsgemäße Verdrängungseinrichtung als Rotor ausgeführt ist, ist es im allgemeinen nicht erforderlich, noch zusätzliche Einrichtungen zum Aufreißen des Wasserfilms vorzusehen. Jedoch schließt die Erfindung nicht aus, daß dem Rotor eine solche Einrichtung vorgeschaltet ist, um dadurch die vom Rotor zu leistende Verdrängungsarbeit zu verringern.

Die Ablenkeinrichtung hat die Eigenschaft, daß sie das aufgewirbelte Wasser auffängt und seitlich zurück zur Fahrbahn richtet. Dadurch wird vermieden, daß ein Wasserschwall mit beträchtlicher seitlicher Wurfweite entsteht. Auch die Ausbreitung des Sprühnebels nach oben wird gedämpft. Dies kannunabhängig von dem Aquaplaning-Schutz - eine erwünschte Wirkung sein, die vornehmlich bei Lastfahrzeugen und Omnibussen, bei denen der Aquaplaningeffekt eine geringere Rolle spielt, gezielt genutzt werden kann.

Die Erfindung wird im folgenden näher unter Bezugnahme auf die Zeichnung erläutert, die in schematischer Darstellung vorteilhafte Ausführungsbeispiele verauschlicht. Es zeigen:

Fig. 1 u. 2 eine Seiten- und Frontansicht eines Fahrzeugteils mit einer ersten Ausführungsform der Erfindung,

Fig. 3 eine der Fig. 1 entsprechende Seitenansicht einer zweiten Ausführungsform,

Fig. 4 die Radialansicht des in Fig. 3 verwendeten Rotors,

Fig. 5 eine Teil-Seitenansicht des Rotors gemäß Fig. 4,

Fig. 6 eine Seitenansicht ähnlich der Fig. 1 einer dritten Ausführungsform,

Fig. 7 eine Unteransicht der Anordnung gemäß Fig. 6,

Fig. 8 u.9 Seitenansichten von Rotoren mit vorwärts bzw. rückwärts gekrümmten Rotorblättern,

Fig. 10 u. 11 Radialansichten eines Rotors mit wabenförmig angeordneten Rotorblättern,

Fig. 12 die Ansicht eines Rotors mit rohrförmigen Verdrängungselementen

Fig. 13 u. 14 Radialansichten von Rotoren mit unterschiedlich schräg verlaufenden Rotorblättern,

Fig. 15 einen Rotor mit schräg angeordneter Achse,

Fig. 16 u. 17 zwei unterschiedliche Antriebsanordnungen,

Fig. 18 eine Teilansicht einer Anordnung mit einer dem Rotor vorgeschalteten Einrichtung zum Aufreißen der Flüssigkeitsschicht,

Fig. 19 u. 20 einen vertikalen Längsschnitt und eine Draufsicht einer praktischen Ausführungsform und

Fig. 21 u. 22 eine Seiten- bzw. Frontansicht eines die erfindungsgemäße Vorrichtung umfassenden Fahrzeugteils.

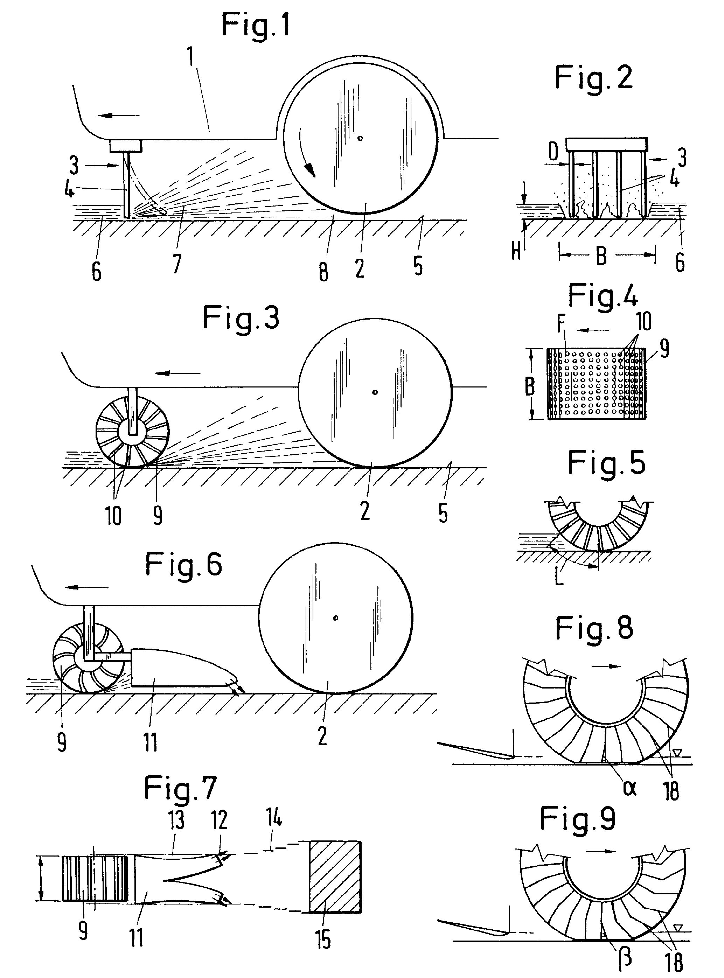

Das Fahrzeug, von dem in Fig. 1 lediglich ein Teil 1 sowie ein vor Aquaplaning zu schützendes Vorderrad 2 erscheint, ist mit der erfindungsgemäßen Vorrichtung 3 ausgestattet, die als Verdrängungseinrichtung eine Mehrzahl von Fingern 4 aufweist, die an ihrem oberen Ende mit dem Fahrzeug 1 verbunden sind und im wesentlichen bis auf die Oberfläche 5 der Fahrbahn hinabreichen, um in die Flüssigkeitsschicht 6 einzutauchen. Selbstverständlich gilt dies nur für den aktiven Zustand der Vorrichtung, wenn sie auf die Fahrbahn abgesenkt ist. Nur dieser Zustand wird im Zusammenhang mit der Erfindung im wesentlichen erwähnt. Es versteht sich aber, daß die Vorrichtung angehoben ist, wenn sie nicht aktiv sein soll.

Wenn im Zusammenhang der Erfindung von einer Voirichtung gesprochen wird, so versteht sich, daß mehrere Räder mit solchen Vorrichtungen ausgerüstet werden können. In der Regel genügt es, lediglich die Vorderräder damit auszurüsten, da der Verdrängungseffekt sich auch noch im Bereich der Hinterräder auswirkt, die der Spur der Vorderräder folgen.

Die Vorrichtung 3 gemäß Fig. 1 kann mit einer Steuereinrichtung verbunden sein, die die Höhe der Finger 4 so einstellt, daß sie in der Regel einen geringfügigen Bodenabstand besitzen. Da die Stäbe jedoch unempfindlich und flexibel ausgeführt sind, schadet es nicht, wenn sie bei Oberflächenunebenheiten auf die Fahrbahn aufstoßen und dabei in der strichpunktiert angedeuteten Weise vorübergehend verbogen werden. Die Steuereinrichtung braucht daher nicht reaktionsschnell und empfindlich zu sein. Es besteht auch die Möglichkeit, auf eine solche Steuereinrichtung gänzlich zu verzichten, wenn die Stäbe ständig in der strichpunktiert dargestellten Weise auf der Fahrbahn schleifen oder wenn als Verdrängungseinrichtung ein Rotor verwendet wird, der weiter unten erläutert wird.

Die Wirkung der in Fig. 1 und 2 dargestellten Verdrängungseinrichtung besteht darin, daß die Stäbe 4 die Wasserschicht 6 aufreißen, versprühen und verwirbeln, wie dies im Bereich 7 zwischen der Vorrichtung 3 und dem Fahrzeugrad 2 angedeutet ist. Der größte Teil der Wasserpartikeln trifft weit oberhalb des hydrodynamisch wirksamen Keilspalts 8 auf das Fahrzeugrad 2 und kann daher kein Aufschwimmen desselben hervorrufen. Das in den Keilspalt 8 gelangende Wasser umfaßt nur noch eine dünne Wasserschicht auf der Fahrbahn und ist im übrigen je nach Bodenfreiheit und Einwirkungsintensität der Verdrängungseinrichtung 4 so stark aufgelockert und mit Luft durchsetzt, daß Dichte und Viskosität auf ein ungefährliches Maß herabgesetzt sind.

Die Verdrängungselemente 4 sind, wie aus Fig. 2 ersichtlich, in beträchtlichem gegenseitigen bestand angeordnet. Da sie die Flüssigkeitsschicht 6 mit hoher Geschwindigkeit durchfahren, erstreckt sich ihre verdrängende Einwirkung auch auf die Zwischenräume. So kommt es, daß von einem Einwirkungsquerschnitt gesprochen werden kann, der - in diesem Fall auf die Fahrtrichtung bezogen - die Breite B und die Höhe H der Wasserschicht besitzt, während der Verdrängungsquerschnitt lediglich von dem Produkt der Dicke D der Verdrängungselemente 4 mal ihrer Anzahl n mal der Höhe H ist und lediglich einen Bruchteil des Einwirkungsquerschnitts bildet. Da der für die Verdrängung erforderliche Energieaufwand durch den Staudruck bestimmt ist, der auf den Verdrängungsquerschnitt wirkt, verlangt die Erfindung einen wesentlich geringeren Energieaufwand als bekannte Vorrichtungen. Außerdem kann sich die Erfindung im Bereich der Verdrängungselemente mit deren Verdrängungseffekt begnügen, ohne eine gerichtete Umlenkwirkung auf die verdrängte Flüssigkeit ausüben zu müssen (wenngleich dies möglich ist) und kann daher den Verdrängungselementen eine beliebige Form geben, die ihrer Beanspruchung durch etwaigen Kontakt mit der Fahrbahn und anderen Störeinflüssen gerecht wird.

Vorzugsweise sieht die Erfindung einen Rotor als Verdrängungseinrichtung vor. Sein Vorteil besteht zum einen darin, daß der abrollende Körper wesentlich weniger empfindlich auf Fahrbahnungleichmäßigkeiten und Fremdkörper reagiert als ein feststehender Körper. Zum anderen zeigt ein Rotor eine besonders günstige Verdrängungskinematik. Anders als ein fest mit dem Fahrzeug verbundener Verdrängungskörper, der in Fahrtrichtung in die zu verdrängende Flüssigkeitsschicht eindringt, dringen die an der Oberfläche des Rotors befindlichen Verdrängungselemente etwa in ihrer Radialrichtung in die Wasserschicht ein. Sie werden daher vom Staudruck in ihrer Längsrichtung beansprucht und können deshalb verhältnismäßig höhere Kräfte aufnehmen und entsprechend feingliedriger gestaltet werden. Gemäß der Richtung, in der die Verdrängungselemente 10 in die Wasserschicht eindringen, ist in diesem Fall der Einwirkungsquerschnitt als das Produkt aus der Breite B des Rotors (Fig. 4) mal der Länge L des in Eintauchbewegung befindlichen Umfangsbogens (Fig. 5) zu definieren. Demgegenüber ist der Verdrängungsquerschnitt die Summe der Anzahl n der Querschnitte F der in dem Einwirkungsquerschnitt befindlichen Verdrängungselemente 10. Der Verdrängungsquerschnitt kann bei Rotoren in der Größenordnung von 5 bis 10 % des Einwirkungsquerschnitts liegen.

Die Wirkung der Verdrängungselemente des Rotors spielt sich in zwei Phasen ab. In der ersten Phase während der Eindringbewegung wird das von den Verdrängungselementen unmittelbar verdrängte Wasser sowie das mittelbar von dem verdrängten Wasser beaufschlagte Wasser in den Zwischenräumen der Verdrängungselemente in heftige Bewegung versetzt und verspritzt. In der zweiten Phase, in der die Verdrängungselemente sich wieder anheben, nehmen sie das Wasser in ihrer Hubbewegung mit, so daß sich beispielsweise ein Spritzbild ergibt, wie es in Fig. 3 angedeutet ist. Die Wirkung auf das Fahrzeugrad 2 ist so, wie dies im Zusammenhang mit Fig. 1 beschrieben wurde. Da der Rotor 9 auf der Fahrbahn 5 abrollen kann, ist mit einem geringeren, schichtförmigen Rückstand auf der Fahrbahnoberfläche und einer ausgeprägteren Hubwirkung zu rechnen.

Dank der günstigen Beanspruchung der Verdrängungselemente des Rotors 9 können diese aus verhältnismäßig weichelastischem Material hergestellt werden, beispielsweise Gummi oder gummiartigen Werkstoffen. Sie sind daher unempfindlich gegenüber Fremdkörperstößen und Fahrbahnunregelmäßigkeiten. In der Regel muß jedoch Nachgiebigkeit des gesamten Rotors durch federnde Aufhängung am Fahrzeug vorgesehen sein.

Sowohl feststehende als auch - in noch höherem Maße - rotierende Verdrängungseinrichtungen haben den Effekt, daß das verdrängt Wasser zu einem wesentlichen Teil angehoben wird. Dies kann von der Erfindung dadurch genutzt werden, daß der Verdrängungseinrichtung eine Ablenkeinrichtung 11 nachgeschaltet ist, deren Prinzip anhand von Fig. 6 und 7 erläutert wird. Sie wird von Führungsflächen gebildet, die das von der Verdrängungseinrichtung ausgehende, angehobene Wasser aufnehmen und zur Seite ableiten, um es aus dem Bereich des folgenden Fahrzeugrads 2 herauszubringen. Gemäß Fig. 7 kann dies in solcher Weise geschehen, daß das durch Pfeile 12 angedeutete, beiderseits aus der Ablenkeinrichtung 11 austretende Wasser gegen den strichpunktiert angedeuteten Randbereich 13 des außerhalb der Wirkungsbreite $B_1$ des Rotors 9 liegenden Wassers gerichtet wird, wodurch auf dies ein seitlicher Impuls ausgeübt wird, der zu einer seitlichen Verschiebung dieses Randbereichs im Sinne der Linien 14 führt. Folglich kann die Wirkungsbreite $B_1$ der Verdrängungseinrichtung geringer sein als die Breite $B_2$ der Aufstandsfläche 15 des Reifens 2.

Die Ablenkeinrichtung 11 kann eine beträchtliche Bodenfreiheit haben, weil die Wasserschicht 6 von dem Rotor 9 größtenteils angehoben wurde. Die eingestellte Bodenfreiheit kann dadurch aufrechterhalten werden, daß die Ablenkeinrichtung mechanisch mit der Rotorlagerung verbunden ist, wie dies in Fig. 6 durch die Striche 27 angedeutet ist.

Unterschiedliche Rotorformen werden im folgenden anhand von Fig. 8 bis 15 erläutert.

Vorwärts gekrümmte Rotorschaufeln, wie sie in Fig. 8 und 6 angedeutet sind, finden einen geringeren Eintauchwiderstand beim Eindringen in die Flüssigkeitsschicht vor und wirken während ihrer Hubbewegung mit größerer Fläche auf das umgebende Wasser ein. Sie erzeugen daher einen stärkeren Hubeffekt und damit eine bessere Auflösung der Flüssigkeitsschicht. Das gilt im Prinzip bei jeder Umfangsgeschwindigkeit, ist aber besonders ausgeprägt dann, wenn die Umfangsgeschwindigkeit des Rotors größer ist als die Fahrtgeschwindigkeit.

Umgekehrt können sich rückwärts gekrümmte Schaufeln gemäß Fig. 9 dann empfehlen, wenn die Umfangsgeschwindigkeit des Rotors geringer ist als die Fahrtgeschwindigkeit, was durch Bremsung des Rotors bewirkt werden kann.

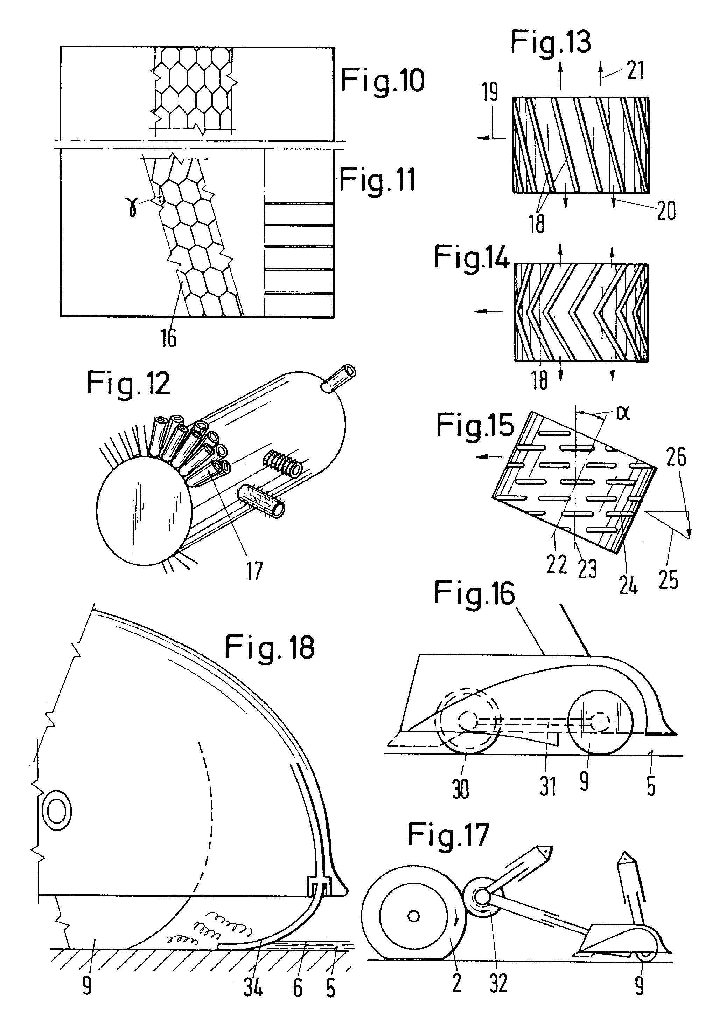

Gemäß Fig. 10 sind am Rotor blattförmige Verdrängungselemente 16 vorgesehen, die einander zu im Umfangsschnitt geschlossenen, wabenförmigen Zellen ergänzen, die zum Umfang hin offen sind. Da dem in diesen Zellen enthaltenen und großenteils hochgespritzten Wasser durch die seitliche Geschlossenheit der Zellen das Entweichen erschwert ist, haben derart geformte Rotoren eine gute Hubwirkung. Dieselben Vorteile hat auch die zur Querrichtung schräge Anordnung der Wabenzellen gemäß Fig. 11, wobei zusätzlich eine Verringerung des Abrollgeräusches zu verzeichnen ist.

Die Verwendung von sich gegenseitig zu geschlossenen Zellen ergänzenden Lamellen hat auch den Vorteil, daß sie sich gegenseitig abstützen und daher besonders dünn und nachgiebig ausgeführt werden können.

Gemäß Fig. 12 ist der Rotor mit hohtstabförmigen Verdrängungselementen 17 besetzt, die einfach rohrförmig sein können, wie dies links in der Fig. dargestellt ist oder zur Verstärkung der Verdrängungs- und Hubwirkung auch mit Oberflächenwellen, Stacheln oder dergleichen Unregelmäßigkeiten versehen sein können, wie dies an anderer Stelle in der Figur angedeutet ist.

Obgleich der erfindungsgemäße Rotor in erster Linie die Aufgabe hat, die Flüssigkeitsschicht zu zerteilen und anzuheben, kann ihm auch eine seitenfördernde Wirkung gegeben werden. Wenn Rotorblätter 18 gemäß Fig. 13 schräg zur Fahrzeugquerrichtung und zur Rotorachse verlaufen, haben sie einen seitenfördernden Effekt, sobald eine Relativgeschwindigkeit in Fahrrichtung zwischen dem Rotorumfang und dem Wasser auftritt. Wenn der in Fahrrichtung 19 bewegte Rotor eine Umfangsgeschwindigkeit hat, die höher als die Fahrgeschwindigkeit ist, wird das Wasser im Sinne der Pfeile 20 seitlich beschleunigt, während bei gebremstem Rotor die umgekehrte Förderrichtung 21 gilt.

Wenn eine gepfeilte Anordnung der Rotorblätter gemäß Fig. 14 gewählt wird, findet eines Seitenförderung in beide Richtungen dann statt, wenn die Umfangsgeschwindigkeit des Rotors geringer als die Fahrgeschwindigkeit ist.

Ein Seitenfördereffekt kann auch dadurch erreicht werden, daß gemäß Fig. 15 die Achse 22 des Rotors gegenüber der Fahrzeugquerrichtung 23 um den Winkel $\alpha$ in einer Horizontalebene schräg angeordnet wird. Da sich Jedes Verdrängungselement 24 dabei in der Richtung 25 bewegt, hat es nicht nur eine in Fahrtrichtung 19 verlaufende Bewegungskomponente, sondern auch eine seitliche Bewegungskomponente 26, die das beaufschlagte Wasser seitlich beschleunigt. In einem solchen Fall haben die Verdrängungselemente 24 zweckmäßigerweise eine flächige Ausdehnung quer zur gewünschten Beschleunigungsrichtung 26.

Die Rotorblätter können in allen Beispielen flächig geschlossen oder auch zur Gewichtsverringerung durchbrochen ausgeführt werden.

Wünscht man aus Gründen des Verschleißes, des Abrollgeräusches oder wegen einer Relativgeschwindigkeit der Rotoroberfläche zur Fahrbahnoberfläche, daß der Rotor keinen dauernden Festkörperkontakt mit der Fahrbahnoberfläche hat, so läßt sich dies dadurch erreichen, daß neben dem Rotor eine Stützscheibe angeordnet ist, die etwas weiter zur Fahrbahnoberfläche vorragt als der Rotor, in Fahrbahnrichtung ausgerichtet ist und eine mit der Fahrgeschwindigkeit übereinstimmende Umfangsgeschwindigkeit aufweist.

In vielen Fällen braucht ein gesonderter Antrieb des Rotors nicht vorgesehen zu sein; er wird durch Reibung von der Fahrbahn und/oder einer darauf befindlichen Flüssigkeitsschicht in Drehung versetzt. Stattdessen kann er mit einem gesonderten Antriebsmotor versehen sein, wobei ein hydraulischer Motor besondere Erwähnung verdient, weil er eine Abstimmung der Rotorgeschwindigkeit auf die Fahrgeschwindigkeit gestattet. Schließlich sei die Möglichkeit erwähnt, den Rotor mittels eines Reibrads anzutreiben. Fig. 16 zeigt diejenige Alternative, bei welcher ein Reibrad 30 auf der Fahrbahnoberfläche 5 abrollt und über eine beliebige Transmissionseinrichtung 31 mit dem Rotor 9 verbunden ist, während gemäß Fig. 17 das Reibrad 32 auf der Oberfläche des Fahrzeugrads 2 abrollt. In allen Fällen ist durch in der Technik geläufige und daher hier nicht zu erläuternde Einrichtungen für die Aufrechterhaltung einer die Reibkraftübertragung gewährleistenden Anpressung gesorgt. Selbstverständlich ist auch das Reibrad zurückziehbar, wenn die Aquaplaning-Schutzvorrichtung nicht aktiv ist.

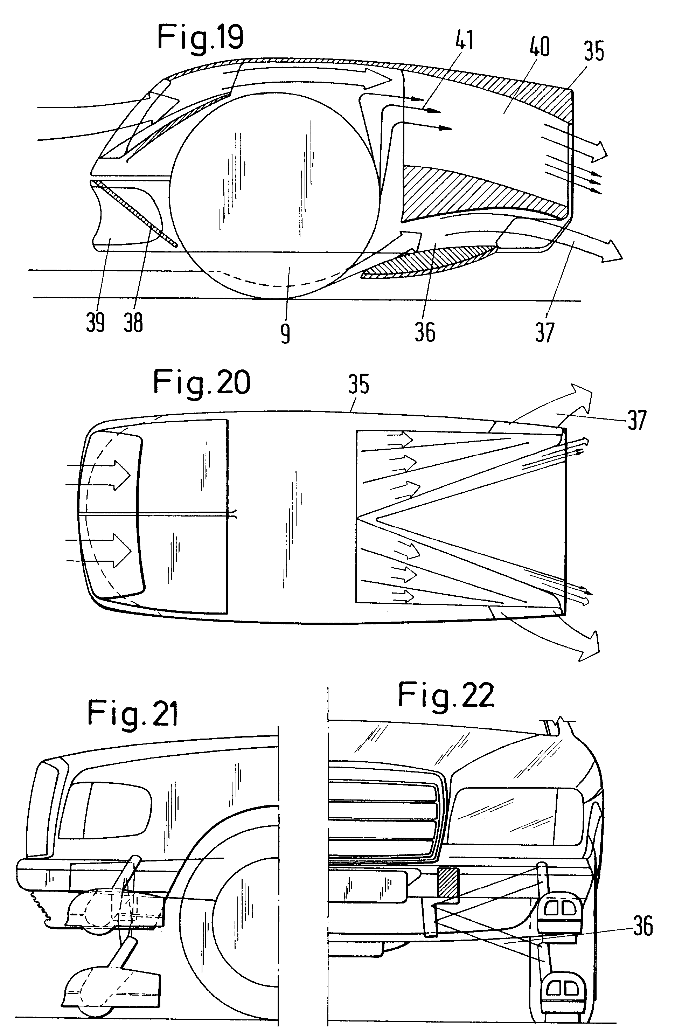

Fig. 18 zeigt ein Ausführungsbeispiel, bei welchem dem Rotor 9 eine Einrichung zum Aufreißen des Wasserfilms vorgeschaltet ist, die aus einer Mehrzahl nebeneinander am Rotorgehäuse 33 angeordneter und auf die Fahrbahnoberfläche 5 hinabreichender Stäbchen oder Röhrchen 34 gebildet ist und deren Funktion der unter Bezugnahme auf Fig. 1 und 2 beschriebenen Verdrängungseinrichtung ähnlich ist, aber schwächer sein kann, da lediglich eine vorbereitende Auflockerung der Flüssigkeitsschicht beabsichtigt ist. Durch die rohrförmig ausgeführten Elemente der Aufreißeinrichtung kann gegebenenfalls Druckluft zugeführt werden, die zu einer zusätzlichen Auflockerung der Flüssigkeitsschicht führt.

Während die Darstellungen in Fig. 1 bis 18 schematisch waren, geben die Fig. 19 bis 22 eine Vorstellung von einer Möglichkeit der praktischen Verwirklichung. Demgemäß ist der Rotor 9 in einem Gehäuse 35 gelagert, das über Verbindungs- und Verstellglieder 36 mit dem Fahrgestell derart verbunden ist, daß die Vorrichtung alternativ in inaktive und aktive Stellung gebracht werden kann (Fig. 21 und 22) und in der aktiven Stellung nachgiebig gegen die Fahrbahn gedrückt ist.

In Fig. 19 erkennt man im Anschluß an den Rotor 9 innerhalb des Gehäuses 35 einen Kanal 36, der als Ablenkeinrichtung die Masse des hochgeschleuderten Wassers aufnimmt und im Sinne der Pfeile 37 gegen die stehengebliebenen Ränder der Wasserschicht schleudert.

Vor dem Rotor 9 enthält das Gehäuse eine geneigte Metallkufe 38, die dazu dient, die gesamte Vorrichtung bei Kollision mit einem auf der Fahrbahn liegenden Gegenstand, beispielsweise einem Stein, weitgehend schadenfrei anzuheben und den Rotor vor dem vollen Aufprall zu schützen. Der Metallkufe 38 kann ein Gummileitkörper 39 vorgeschaltet sein, der dazu dient, Schwallwasser um die Vorrichtung herumzuleiten, falls die Wasserschicht höher ist als von dem Rotor der nachgeschalteten Ablenkeinrichtung bewältigbar.

Im oberen Bereich des Gehäuses 35 befindet sich ein Luftkanal 40, dessen Luftstrom dasjenige durch Pfeile angedeutete Spritzwasser 41 aufnimmt und nach unten und zur Seite lenkt, das nicht von dem Kanal 36 erfaßt werden konnte.

Man erreicht mit dieser Vorrichtung nicht nur die Auflösung der Wasserschicht vor dem vor Aquaplaning zu schützenden Fahrzeugrad 2, sondern auch eine weitgehende Unterdrückung von Schwall- und Spritzwas-

EP 0 403 505 B1

ser, das andernfalls von den Rädern zur Seite und hochgeschleudert würde und zur Belästigung oder gar Gefährdung anderer Verkehrsteilnehmer führen würde.

**Patentansprüche**

1. Vorrichtung zum Schutz eines Fahrzeugrads (2) vor dem Aufschwimmen (Aquaplaning) auf einer Wasserschicht (6) mittels einer in die Wasserschicht (6) eindringenden Verdrängungseinrichtung (3, 9), die von einer Mehrzahl von Abstand voneinander aufweisenden Verdrängungselementen (4, 10, 16, 17, 18, 24, 34) gebildet ist, dadurch gekennzeichnet, daß der auf die Richtung der Relativbewegung der Verdrängungselemente zu der Wasserschicht bezogene Verdrängungsquerschnitt (D x n x H bzw. F x n) der Gesamtheit der mit der Wasserschicht in Kontakt befindlichen Verdrängungselemente wesentlich geringer ist als ihr Einwirkungsquerschnitt (H x B bzw. B x L).

2. Vorrichtung nach Anspruch 1, dadurch gekennzeichnet, daß der Verdrängungseinrichtung (3, 9) eine das Wasser seitlich ablenkende Einrichtung (11) mit größerer Bodenfreiheit als diejenige der Verdrängungseinrichtung nachgeschaltet ist.

3. Vorrichtung nach Anspruch 1 oder 2, dadurch gekennzeichnet, daß die Verdrängungseinrichtung (3) flexible Stäbe, beispielsweise Stahlseile oder dergleichen, als Verdrängungselemente (4) umfaßt.

4. Vorrichtung nach Anspruch 1 oder 2, dadurch gekennzeichnet, daß die Verdrängungseinrichtung von einem Rotor (9) mit etwa parallel zur Fahrzeugquerrichtung verlaufender Drehachse und etwa radial verlaufenden Verdrängungselementen (10, 16, 17, 10, 24) gebildet ist.

5. Vorrichtung nach Anspruch 4, dadurch gekennzeichnet, daß die Dichte der Verdrängungselemente in der Außenumfangsfläche nicht größer als etwa 30 % ist.

6. Vorrichtung nach Anspruch 5, dadurch gekennzeichnet, daß die Dichte nicht größer als etwa 15 % ist.

7. Vorrichtung nach einem der Ansprüche 4 bis 6, dadurch gekennzeichnet, daß die Verdrängungselemente stabförmig (10) oder rohrförmig (17) sind.

8. Vorrichtung nach einem der Ansprüche 4 bis 6, dadurch gekennzeichnet, daß die Verdrängungselemente blattförmig (16, 18, 24) sind.

9. Vorrichtung nach Anspruch 8, dadurch gekennzeichnet, daß die Rotorblätter (18) eine überwiegend parallel zur Rotorachse verlaufende Richtungskomponente haben.

10. Vorrichtung nach Anspruch 8 oder 9, dadurch gekennzeichnet, daß der Rotor (9) mit einer die Fahrgeschwindigkeit übersteigenden Umfangsgeschwindigkeit angetrieben ist.

11. Vorrichtung nach einem der Ansprüche 8 bis 10, dadurch gekennzeichnet, daß die Rotorblätter vorwärts gekrümmt (Fig. 8) sind.

12. Vorrichtung nach Anspruch 8 oder 9, dadurch gekennzeichnet, daß der Rotor (9) mit einer unter der Fahrgeschwindiglkeit liegenden Umfangsgeschwindigkeit betrieben ist.

13. Vorrichtung nach Anspruch 12, dadurch gekennzeichnet, daß die Rotorblätter rückwärts gekrümmt sind (Fig. 9).

14. Vorrichtung nach Anspruch 10 oder 12, dadurch gekennzeichnet, daß die Rotorblätter (18) einen Winkel mit der Fahrzeugquerrichtung (23) einschlieften.

15. Vorrichtung nach einem der Ansprüche 4 bis 6, dadurch gekennzeichnet, daß die Rotorachse (22) schräg zur Fahrzeugquerrichtung (23) verläuft.

16. Vorrichtung nach Anspruch 15, dadurch gekennzeichnet, daß die Rotorblätter (24) im Eintauchbereich etwa in Fahrzeugrichtung (19) verlaufen.

17. Vorrichtung nach einem der Ansprüche 4 bis 16, dadurch gekennzeichnet, daß der Rotor (9) im wesentlichen mit Fahrbahnberührung angeordnet ist.

18. Vorrichtung nach einem der Ansprüche 4 bis 16, dadurch gekennzeichnet, daß dem Rotor (9) ein Stützrad zugeordnet ist.

19. Vorrichtung nach Anspruch 2, dadurch gekennzeichnet, daß die Verdrängungseinrichtung (4, 9) eine geringere Breite ($B_1$) als die Aufstandsfläche des zu schützenden Rads ($B_2$) aufweist und die Ablenkeinrichtung (11) den Wasserstrom (12) gegen die stehengebliebenen Ränder (13) der Wasserschicht (6) richtet.

20. Vorrichtung nach einem der Ansprüche 1 bis 19, dadurch gekennzeichnet, daß einem Rotor (9) eine den Wasserfilm aufreißende Einrichtung (34) vorgeschaltet ist.

21. Vorrichtung nach einem der Ansprüche 4 bis 20, dadurch gekennzeichnet, daß die Rotorwelle höhenbestimmend mit der Ablenkeinrichtung (11) verbunden ist.

## Claims

1. Device for protecting a vehicle wheel (2) against aquaplaning on a water film (6) by a displacement means (3, 9) which penetrates into the water film (6) and is formed by a plurality of displacement elements (4, 10, 16, 17, 18, 24, 34) at a distance from one another, characterized in that the displacement cross-section (D x n x H or F x n), with regard to the direction of the movement of the displacement elements relative to the water film, of the entirety of the displacement elements in contact with the water film is substantially smaller than its operational cross-section (H x B or B x L).

2. Device according to Claim 1, characterized in that a means (11) laterally deflecting the water is arranged behind the displacement means (3, 9), which means (11) has greater ground clearance than that of the displacement means.

3. Device according to Claim 1 or 2, characterized in that the displacement means (3) comprises flexible bars, for example steel ropes or the like, as displacement elements (4).

4. Device according to Claim 1 or 2, characterized in that the displacement means is formed by a rotor (9) having an axis of rotation running approximately parallel to the transverse direction of the vehicle and approximately radially running displacement elements (10, 16, 17, 18, 24).

5. Device according to Claim 4, characterized in that the density of the displacement elements in the outer peripheral surface is not greater than about 30%.

6. Device according to Claim 5, characterized in that the density is not greater than about 15%.

7. Device according to one of Claims 4 to 6, characterized in that the displacement elements are bar-shaped (10) or tubular (17).

8. Device according to one of Claims 4 to 6, characterized in that the displacement elements are leaf-shaped (16, 18, 24).

9. Device according to Claim 8, characterized in that the rotor blades (18) have a directional component running predominantly parallel to the rotor axis.

10. Device according to Claim 8 or 9, characterized in that the rotor (9) is driven at a peripheral speed exceeding the driving speed.

11. Device according to one of Claims 8 to 10, characterized in that the rotor blades are curved forward (Fig. 8).

12. Device according to Claim 8 or 9, characterized in that the rotor (9) is operated at a peripheral speed below the driving speed.

13. Device according to Claim 12, characterized in that the rotor blades are curved backward (Fig, 9).

14. Device according to Claim 10 or 12, characterized in that the rotor blades (18) enclose an angle with the transverse direction (23) of the vehicle.

15. Device according to one of Claims 4 to 6, characterized in that the rotor axis (22) runs at an angle to the transverse direction (23) of the vehicle.

16. Device according to Claim 15, characterized in that the rotor blades (24), in the plunging region, run approximately in the vehicle direction (19).

17. Device according to one of Claims 4 to 16, characterized in that the rotor (9) is arranged essentially with roadway contact.

18. Device according to one of Claims 4 to 16, characterized in that a supporting wheel is allocated to the rotor (9).

19. Device according to Claim 2, characterized in that the displacement means (4, 9) has a smaller width (B$_1$) than the contact surface of the wheel (B$_2$) to be protected, and the deflecting means (11) directs the water flow (12) towards the margins (13) of the water film (6) which are left behind.

20. Device according to one of Claims 1 to 19, characterized in that a means (34) separating the water film is arranged in front of a rotor (9).

21. Device according to one of Claims 4 to 20, characterized in that the rotor shaft is connected to the deflecting means (11) in such a way as to determine the height.

## Revendications

1. Dispositif de protection d'une roue de véhicule (2) contre l'aquaplanage sur une couche d'eau (6), au moyen d'un dispositif de déplacement (3, 9) qui pénètre dans la couche d'eau et qui est constitué par une multiplicité d'éléments de déplacement espacés (4, 10, 16, 17, 18, 24, 34), caractérisé en ce que la section de déplacement (D x n x H ou F x n) de la totalité des éléments de déplacement se trouvant en contact avec la couche d'eau, rapportée à la direction du mouvement relatif des éléments de déplacement par rapport à la couche d'eau, est beaucoup plus petite que leur section d'action (H x B ou B x L)

2. Dispositif selon la revendication 1, caractérisé en ce qu'il est disposé, a la suite du dispositif de déplacement (3, 9), un dispositif (11) qui dévie latéralement l'eau et qui a une garde au sol plus grande que celle du dispositif de déplacement.

3. Dispositif selon la revendication 1 ou 2, caractérisé en ce que le dispositif de déplacement (3) comprend, en tant qu'éléments de déplacement, des joncs flexibles, par exemple des câbles d'acier ou similaires.

4. Dispositif selon la revendication 1 ou 2, caractérisé en ce que le dispositif de déplacement est constitué par un rotor (9) dont l'axe de rotation s'étend à peu près parallélement à la direction transversale du véhicule et qui comporte des éléments de déplacement (10, 16, 17, 18, 24) s'étendant à peu près radialement.

5. Dispositif selon la revendication 4, caractérisé en ce que la densité des élements de déplacement à la surface périphérique extérieure n'est pas supérieure à 30% environ.

6. Dispositif selon la revendication 5, caractérisé en ce que la densité n'est pas supérieure à 15% environ.

7. Dispositif selon l'une quelconque des revendications 4 à 6, caractérisé en ce que les éléments de déplacement sont en forme de jonc (10) ou de tube (17).

8. Dispositif selon l'une quelconque des revendications 4 à 6, caractérisé en ce que les éléments de déplacement sont en forme de lame (16, 18, 24).

9. Dispositif selon la revendication 8, caractérisé en ce que les lames (18) du rotor ont une composante directionnelle principale qui s'étend parallèlement à l'axe du rotor.

10. Dispositif selon la revendication 8 ou 9, caractérisé en ce que le rotor (9) est entraîné à une vitesse périphérique supérieure à la vitesse de marche.

11. Dispositif selon l'une quelconque des revendications 8 à 10, caractérisé en ce que les lames du rotor sont courbées en avant (fig. 8).

12. Dispositif selon la revendication 8 ou 9, caractérisé en ce que le rotor (9) est entraîné à une -vitesse périphérique inférieure à la vitesse de marche.

13. Dispositif selon la revendication 12, caractérisé en ce que les lames du rotor sont courbées en arrière (fig. 9).

14. Dispositif selon la revendication 10 ou 12, caractérisé en ce que les lames (18) du rotor forment un angle avec la direction transversale (23) du véhicule.

15. Dispositif selon l'une quelconque des revendications 4 à 6, caractérisé en ce que l'axe (22) du rotor s'étend obliquement par rapport à la direction transversale (23) du véhicule.

16. Dispositif selon la revendication 15, caractérisé en ce que les lames (24) du rotor s'étendent à peu près dans la direction du véhicule (19) dans la région d'immersion.

17. Dispositif selon l'une quelconque des revendications 4 à 16, caractérisé en ce que le rotor est disposé pratiquement en contact avec la chaussée.

18. Dispositif selon l'une quelconque des revendications 4 à 16, caractérisé en ce qu'une roue-support est adjointe au rotor (9).

19. Dispositif selon la revendication 2, caractérisé en ce que le dispositif de déplacement (4, 9) présente une largeur ($B_1$) inférieure à celle de la surface de contact au sol ($B_2$) de la roue à protéger et le dispositif de déviation (11) dirige le courant d'eau (12) vers les bords immobiles (13) de la couche d'eau (6).

20. Dispositif selon l'une quelconque des revendications 1 à 19, caractérisé en ce qu'il est disposé, en avant d'un rotor (9), un dispositif (34) qui déchire le film d'eau.

21. Dispositif selon l'une quelconque des revendications 4 à 20, caractérisé en ce que l'arbre du rotor est raccordé au dispositif de déviation (11) de façon à en déterminer la hauteur.

## Fig.1

## Fig.2

## Fig.3

## Fig.4

## Fig.5

## Fig.6

## Fig.8

## Fig.7

## Fig.9

Fig.10

Fig.11

Fig.12

Fig.13

Fig.14

Fig.15

Fig.16

Fig.17

Fig.18

Fig.19

Fig.20

Fig.21

Fig.22